# EUROPÄISCHE PATENTSCHRIFT

(11) **EP 1 819 941 B1**
(45) Veröffentlichungstag und Bekanntmachung des Hinweises auf die Patenterteilung: **12.08.2009**
(21) Anmeldenummer: 05824121.7
(22) Anmeldetag: 01.12.2005
(51) Int. Cl.: F16G 13/06, F16G 5/18

(54) **LASCHENKETTE FÜR INSBESONDERE EINEN FAHRZEUGANTRIEB**
FLAT LINK ARTICULATED CHAIN PARTICULARLY FOR A VEHICLE DRIVE
CHAINE ARTICULEE DESTINEE NOTAMMENT A UNE TRANSMISSION DE VEHICULE

(30) Priorität: 02.12.2004 DE 102004058308; 23.09.2005 DE 102005045631; 17.11.2005 DE 102005054714
(43) Veröffentlichungstag der Anmeldung: 22.08.2007
(73) Patentinhaber: LuK Lamellen und Kupplungsbau Beteiligungs KG, 77815 Bühl (DE)
(72) Erfinder: PICHURA, Michael, 77815 Bühl (DE); VORNEHM, Martin, 77815 Bühl (DE); SIMONOV, Anton, 77815 Bühl (DE)
(86) Internationale Anmeldenummer: PCT/DE2005/002164
(87) Internationale Veröffentlichungsnummer: WO 2006/058529

(56) Entgegenhaltungen:
- EP-A- 0 259 997
- US-A- 4 010 656

## Beschreibung

Die vorliegende Erfindung betrifft eine Laschenkette für insbesondere einen Fahrzeugantrieb, gemäß dem Oberbegriff von Anspruch 1. Eine derartige laschenkette ist aus der EP 0 259 997 A2 bekannt.

Bei einer solchen Laschenkette kann es sich um eine Zahnkette handeln, die beispielsweise zur Kraftübertragung in einem Allrad-Verteilergetriebe eines Kraftfahrzeugs oder beispielsweise auch an einem Nebenaggregat der Verbrennungskraftmaschine des Kraftfahrzeugs eingesetzt werden kann. In den genannten Fällen ist die Laschenkette als Zahnkette ausgebildet und überträgt zwischen einem angetriebenen und einem antreibenden Kettenrad Zugkraft. Eine solche Laschenkette kann aber beispielsweise auch als Zugmittel in einem Kegelscheibenumschlingungsgetriebe eines Kraftfahrzeugs Anwendung finden, wobei in diesem Fall die Zugkraft nicht formschlüssig über einen Zahneingriff der Laschenkette am Kettenrad, sondern als Reibkraft zwischen zwei Kegelscheibenpaaren des Kegelscheibenumschlingungsgetriebes übertragen wird.

Eine solche, in einem Kegelscheibenumschlingungsgetriebe eingesetzte Laschenkette wird auch als Wiegegelenkkette bezeichnet, wobei die Wiegegelenke oder Druckstücke Wälzflächen aufweisen, mit denen sie, paarweise in Laschenöffnungen der Kettenlaschen angeordnet, aufeinander abwälzen und dabei die von der Laschenkette übertragene Zugkraft in der Form von Druckspannungen aufnehmen und als Reaktionskraft hierauf entsprechende Kräfte in die Kettenlaschen einleiten, wobei die Kraftübertragung zwischen den Druckstücken und den Kettenlaschen an gekrümmt ausgebildeten Anlageflächen stattfindet, die an den Druckstücken und den Kettenlaschen ausgebildet sind.

Eine solche Laschenkette weist also eine Gelenkfunktion auf, die von den Druckstücken mit ihren jeweiligen Wälzflächen übernommen wird und eine Anlagefunktion zwischen den Druckstücken und den Kettenlaschen und muss hierfür der geforderten Festigkeit entsprechend ausgebildet sein. Kommt es nun, wenn die Laschenkette von ihrer gestreckten Lage in eine abgewinkelte Lage übergeht - wenn die Laschenkette beispielsweise über Kettenräder läuft oder zwischen zwei Kegelscheiben geklemmt umgelenkt wird - zu einer Auslenkung der Kette aus der gestreckten Lage, so muss zwischen den Druckstücken und den Kettenlaschen hohe Sicherheit gegen Verdrehung bestehen, da anderenfalls eine Relativbewegung zwischen den Kettenlaschen und den Druckstücken zu reibungsbedingtem Verschleiß und damit einem etwaigen vorzeitigen Ausfall der Laschenkette führt.

Die Kraftübertragung zwischen den Druckstücken und den Kettenlaschen findet üblicherweise im Bereich einer Kontaktfläche zwischen den Kettenlaschen und den Druckstücken statt, die entlang der Längsrichtung der Laschenkette betrachtet den Wälzflächen der Druckstücke gegenüberliegend angeordnet ist, also im Bereich von Rückenflächen der Druckstücke. Das Druckstück leitet an dieser Kontaktfläche zwischen dem Druckstück und der Kettenlasche in die Kettenlasche eine Druckkraft ein, die aufgrund des in Druckstückhöhenrichtung betrachtet vorhandenem Abstand zwischen dem Ort der Krafteinleitung an der Kettenlasche und dem oberen bzw. unteren Randbereich der Druckstückaufnahmeöffnung der Kettenlasche zu einem Moment führt, welches die Rissbildung an der Kettenlasche fördert und im weiteren Ablauf zu Risswachstum und damit Ausfall der Kettenlasche führt.

Es ist auch bereits eine Laschenkette bekannt geworden, bei der zwischen dem Druckstück und der Kettenlasche nicht nur eine Anlagefläche vorliegt - nämlich die der Wälzfläche zwischen den Druckstücken in Laufrichtung der Laschenkette betrachtet hintere Anlagefläche, die an der Druckstückrückenfläche ausgebildet ist - sondern zwischen dem Druckstück und der Kettenlasche zwei Anlageflächen ausgebildet sind, von denen jeweils eine oberhalb und eine unterhalb einer die quer zur Längsrichtung der Laschenkette betrachtete Druckstückhöhenrichtung halbierenden Ebene angeordnet sind. Diese Ausbildung besitzt gegenüber der Ausbildung mit nur einer Anlagefläche den Vorteil der Kraftaufteilung.

Anhand der US 4,507,106 ist eine Laschenkette für die Kraftübertragung bekannt geworden, bei der die Druckstücke einander gegenüberliegende Wälzflächen aufweisen und an den Druckstücken zwei Anlageflächen ausgebildet sind, an denen die Drückstücke mit Anlageflächen der Kettenlaschen in Kontakt stehen und die der Kraftübertragung dienen. Die Druckstücke dieser bekannten Laschenkette sind in einer quer zur Längsrichtung der Laschenkette verlaufenden Querschnittsansicht betrachtet im Bereich der Anlageflächen nahezu kreisförmig ausgebildet und weisen somit den Nachteil einer unzureichenden Verdrehsicherung auf, es kann also zwischen den Druckstücken und der Kettenlasche eine Relativbewegung beim Abwinkeln der Kette stattfinden, die zu einem deutlichen Verschleiß im Kontaktflächenbereich zwischen den Druckstücken und der Kettenlaschen führt und damit zu einem vorzeitigen Ausfall.

Dieses Problem der Verdrehsicherung der Druckstücke in den Kettenlaschen wurde mit der aus der US 4,010,656 bekannten Laschenkette dadurch zu lösen versucht, dass der Anlageflächenbereich der Druckstücke und der zugehörige Anlageflächebereich der Kettenlaschen nicht nahezu kreisförmig ausgebildet ist - da eine solche Ausbildung eine Relativdrehung der Druckstücke in den Kettenlaschen fördert - , sondern die Druckstücke in einer entsprechenden Querschnittansicht nahezu dreieckförmig ausgebildet sind, sodass weitgehend geradlinig ausgebildete Anlageflächen an den Druckstücken mit weitgehend geradlinig ausgebildeten Anlageflächen der Kettenlaschen in Kontakt stehen und somit eine Verdrehsicherung realisiert wurde. Wird nun diese bekannte Laschenkette von einer gestreckten Stellung in eine abgewinkelte Stellung überführt, so mag eine solche Ausbildung zwar einer Verdrehung der Druckstücke in den Kettenlaschen entgegenwirken, es kommt aber zu einem Kantentragen der Druckstücke an den Kettenlaschen. Ein solches Kantentragen führt zu erheblichen Spannungsspitzen im Bereich der Anlageflächen zwischen den Druckstücken und der Kettenlaschen, sodass auch eine solche Ausbildung wieder das Risswachstum an den Kettenlaschen fördert und damit die Lebensdauer der bekannten Laschenkette vermindert wird.

Ausgehend hiervon liegt der vorliegenden Erfindung nunmehr die Aufgabe zugrunde, eine Laschenkette für insbesondere einen Fahrzeugantrieb zu schaffen, mit der bei im Vergleich mit bekannten Laschenketten weitgehenden gleich bleibender Querschnittsfläche der Druckstücke geringere Belastungen der Kettenlaschen realisierbar sind und auch den Anforderungen an die Verdrehsicherheit der Druckstücke in den Kettenlaschen Rechnung getragen wird.

Die Erfindung schafft nun zur Lösung dieser Aufgabe eine Laschenkette mit den Merkmalen des Anspruchs gemäß dem Oberbegriff von Anspruch 1. Eine derartige laschenkette ist aus der EP 0 259 997 A2 bekannt. Vorteilhafte Ausgestaltungen hiervon sind in den weiteren Ansprüchen beschrieben.

Die Erfindung sieht eine Laschenkette für insbesondere einen Fahrzeugantrieb vor, mit einer Vielzahl von über Druckstücke gelenkig miteinander verbundenen Kettenlaschen, wobei die Druckstücke quer zur Längsrichtung der Laschenkette verlaufen und an den Druckstücken und den Kettenlaschen jeweilige gekrümmt ausgebildete Anlageflächen angeordnet sind, entlang derer die Druckstücke und Kettenlaschen zur Kraftübertragung aneinander anliegen und an den Druckstücken gekrümmt ausgebildete Wälzflächen angeordnet sind, entlang derer die Druckstücke zur Kraftübertragung aneinander abwälzen, wobei die Druckstücke in einem in Längsrichtung der Laschenkette verlaufenden Querschnitt in Druckstückhöhenrichtung asymmetrisch ausgebildet sind und die Anlageflächen am in Druckstückhöhenrichtung oberen und unteren Kontaktflächenbereich zwischen Druckstück und Kettenlasche vorgesehen sind, und wobei die Druckstücke quer zur Längsrichtung der Laschenkette in Druckstückhöhenrichtung im oberen Bereich breiter ausgebildet sind als im unteren Bereich.

Werden nun bekannte Druckstücke von Laschenketten betrachtet, so sind diese in einer quer zur Längsrichtung der Laschenkette betrachteten Druckstückhöhenrichtung symmetrisch aufgebaut. Wird in einem einzelnen Druckstück eine die Druckstückhöhe halbierende Ebene eingezeichnet, so sind bekannte Druckstücke so aufgebaut, dass diese Ebene als Spiegelebene für das so virtuell geschnittene Druckstück dient, die obere Druckstückhälfte also spiegelsymmetrisch ist zu der unteren Druckstückhälfte. Diese Ausbildung ist bei der Fertigung der Laschenkette von Vorteil, da die Druckstücke nicht lageselektiv vereinzelt werden müssen, sondern einfach montiert werden können, ohne in ihrer Lage relativ zur Laschenkettenöffnung lageselektiert werden zu müssen.

Wird nun in einem Druckstück nach der vorliegenden Erfindung eine die Druckstückhöhe halbierende Ebene eingezeichnet, so ist das erfindungsgemäße Druckstück asymmetrisch aufgebaut, d. h. also das Druckstück ist in dem Bereich oberhalb dieser virtuellen Druckstückhöhenhalbierungsebene nicht symmetrisch zu dem Bereich des Druckstücks unterhalb dieser Ebene. Das Druckstück ist also in Druckstückhöhenrichtung asymmetrisch aufgebaut und weist bei vergleichbarer Querschnittsfläche gegenüber bekannten Druckstücken eine höhere Steifigkeit auf, obwohl es in einem in Längsrichtung der Laschenkette verlaufenden Querschnitt im unteren Bereich weniger breit, also dünner ausgebildet ist als bekannte Druckstücke. Da das erfindungsgemäße Druckstück in einer Richtung quer zur Druckstückhöhenrichtung im oberen Bereich dicker ausgebildet ist als bekannte Druckstücke, also eine größere Breite besitzt als bekannte Druckstücke, besitzt es eine insgesamt höhere Steifigkeit als symmetrisch ausgebildete bekannte Druckstücke.

Diese asymmetrische Ausbildung der Druckstücke und damit auch der Kettenlaschenöffnungen, die die Druckstücke aufnehmen, führt nun in Verbindung mit den geteilten Anlageflächen, also nicht nur einer, der Druckstückwälzfläche gegenüberliegenden Anlagefläche zwischen dem Druckstück und der Kettenlasche, sondern einer an den Druckstücken und den Kettenlaschen in Längsrichtung der Laschenkette betrachteten oberen Kontaktfläche und unteren Kontaktfläche, also einer oberen Anlagefläche und einer unteren Anlagefläche, dazu, dass eine insgesamt größere Anlagefläche nutzbar ist.

Dies führt auch zu einer Teilung der Anlagekraft und damit dazu, dass die zwischen den oberen und unteren Anlageflächen der Druckstücke und Kettenlaschen wirkenden Kräfte an für die Kettenlaschen weniger schädlichen Orten eingeleitet werden, nämlich an Orten mit kleinerem Abstand in Druckstückhöhenrichtung betrachtet zum Rand der das Druckstück aufnehmenden Kettenlaschenöffnung, weshalb sich am Rand der Kettenlaschenöffnung niedrigere Spannungen ergeben und damit das Auftreten von Rissen bzw. das Risswachstum vermieden wird.

Bei der nach der Erfindung vorgesehenen Laschenkette kommt es also zu einer Kraftaufteilung und da die Krafteinleitungspunkte in die Kettenlasche näher am Rand der die Druckstücke aufnehmenden Öffnung liegen, kommt es aufgrund der reduzierten Kraft und dem auch kürzeren Hebelarm zu niedrigeren Momenten am Rand der Kettenlaschenöffnung und somit zu niedrigeren Spannungen am Öffnungsrand, weshalb sich die Reißfestigkeit und damit die Lebensdauer der Kettenlasche erhöht.

Nach einer Weiterbildung der Erfindung ist es auch vorgesehen, dass ein Wälzradius der Wälzflächen derart gewählt ist, dass sich ein Wälzpunkt zwischen Druckstücken aus einer bei lang gestreckter Laschenkette in Druckstückhöhenrichtung unterhalb einer die Druckstückhöhe halbierenden Ebene befindlichen Lage bei weitgehend abgewinkeltere Laschenkette in eine Lage oberhalb der Ebene bewegt. Wenn die erfindungsgemäße Laschenkette auf Zug belastet wird, so liegt der Wälzpunkt zwischen den Druckstücken unterhalb einer die Druckstückhöhe halbierenden Ebene. Läuft nun die Laschenkette über beispielsweise ein Kettenrad oder zwischen zwei Kegelscheibenpaaren eines Kegelscheibenumschlingungsgetriebes um, wird also abgewinkelt, so wandert dieser Wälzpunkt in eine Lage oberhalb dieser Ebene.

Wandert nun der Wälzpunkt bei einer bekannten Laschenkette so aus, so führt dies zu einer Verdrehung der Druckstücke in den Kettenlaschen und wirkt somit Verschleiß erhöhend. Im Gegensatz hierzu führt dies bei der erfindungsgemäßen Laschenkette nicht zu einer Verschleißerhöhung, da die an den oberen und unteren Anlageflächen zwischen den Druckstücken und Kettenlaschen herrschenden Kräfte aufgrund der Zweipunktanlage einer Verdrehung entgegenwirken und somit ein Auswandern des Wälzpunktes nach der erfindungsgemäßen Laschenkette möglich und zulässig ist. Da der Wälzpunkt auswandert, wenn der Wälzradius der Wälzflächen vergrößert wird, dies aber zu größeren Kontaktflächen der Druckstücke im Bereich der Wälzflächen führt und damit zu einer entsprechenden Spannungsverringerung, kann nach der erfindungsgemäßen Laschenkette der Wälzradius vergrößert werden, ohne dass es zu einer Verdrehung der Druckstücke relativ zu den Kettenlaschen kommt, wie dies bei bekannten Kettenlaschen der Fall ist. Im Gegensatz zu bekannten Laschenketten kann also der Wälzradius der Wälzflächen vergrößert werden, ohne dass damit eine Gefahr der Verdrehung der Druckstücke in den Kettenlaschenöffnungen besteht.

Darüber hinaus ist es nach einer Weiterbildung der Erfindung vorgesehen, dass die Anlageflächen in jeweiligen Endbereich mit einem gekrümmt ausgebildeten Auslauf versehen sind derart, dass ein Kantentragen zwischen Druckstück und Kettenlasche weitgehend vermieden ist. Im Gegensatz zu bekannten Kettenlaschen besitzen also die Anlageflächen keine solche Konfiguration im Endbereich, die zu einem Kantentragen und damit lokal hohen Spannungsspitzen führen würde, sondern gekrümmt ausgebildete Ausläufe, die ein Kantentragen vermeiden.

Bekannte Laschenketten mit nur einer der Wälzfläche der Druckstücke gegenüberliegenden Anlagefläche zwischen den Druckstücken und der Kettenlaschen weisen jeweils oberhalb und unterhalb der Anlagefläche eine Freischnitt auf, in den die fertigungsbedingten Toleranzen bei der Herstellung der Kettenlaschen gelegt werden. Diese Freischnitte sind darüber hinaus mit großen Krümmungen, also kleinen Krümmungsradien gebildet und es hat sich gezeigt, dass auch an diesen Stellen es zu verstärktem Risswachstum kommt, da der Freischnitt bei einer Belastung der Laschenkette mit Zugkraft gleichsam geschlossen wird und zwar aufgrund der Verformung der Kettenlaschen und somit ein Bereich der Kettenlasche mit großer Krümmung großen Zugkräften ausgesetzt wird, die aufgrund der großen Krümmung stark umgelenkt werden müssen und somit zu Spannungsspitzen führen und damit das Risswachstum fördern.

Die erfindungsgemäße Laschenkette geht hier einen anderen Weg. Es ist nach der Erfindung vorgesehen, dass ein Freischnitt zwischen den beiden Anlageflächen ausgebildet ist, der beispielsweise an den Druckstücken vorgesehen werden kann und somit der Freischnitt in einem Bereich außerhalb der Anlageflächen liegt und damit in einem Kontaktflächenbereich zwischen den Druckstücken und den Kettenlaschen, der außerhalb des Kraftflussbereiches liegt. Nach einer Weiterbildung der Erfindung ist es vorgesehen, dass die Kettenlaschen derart ausgebildet sind, dass eine Laschenöffnung zur Aufnahme von Druckstücken Bereiche mit größter Krümmung im zum Kontakt mit Druckstücken vorgesehenen Anlageflächenbereich besitzt. Wie es vorstehend bereits ausgeführt wurde, zeichnet sich die erfindungsgemäße Laschenkette mit nur einem Freischnitt zwischen den beiden Anlageflächen aus und nicht mit zwei Freischnitten, wie dies bei bekannten Laschenketten der Fall ist. Es hat sich gezeigt, dass an den Laschenöffnungen Bereiche mit größter Krümmung in den zum Kontakt mit den Druckstücken vorgesehenen Anlageflächenbereich gelegt werden können, ohne dass dies zur Rissbildung führt.

Ein Ausgangspunkt bei der Schaffung der erfindungsgemäßen Laschenkette ist ja auch, es zu vermeiden, dass die Querschnittsfläche der Druckstücke zunimmt. Da somit an den Kettenlaschen auch Bereiche mit großer Krümmung und damit kleinen Krümmungsradien entstehen, wurden bei der erfindungsgemäßen Laschenkette diese Bereiche mit großer Krümmung in die Anlageflächenbereiche der Kettenlasche gelegt, da es in diesen Bereichen zur Druckkraftübertragung zwischen den Druckstücken und den Kettenlaschen kommt und somit in diesen Bereichen die Kettenlaschen nicht nur auf Zug belastet werden, sondern auch auf Druck und somit dieser Bereich mit großer Krümmung und damit kleinen Krümmungsradien keine empfindliche Zone darstellt. Die Kettenlaschen der Laschenkette nach der vorliegenden Erfindung weisen also ihre größten Krümmungen im Bereich der Anlageflächen auf und nicht außerhalb der Anlagefläche, wie dies bei bekannten Laschenketten der Fall.

Laschenketten werden im Betrieb auch dynamischen Belastungen, wie beispielsweise Zugkraftsprüngen aufgrund von Stoßbelastungen oder dergleichen unterzogen. Diese Stoßbelastungen führen zu einer undefinierten Bewegung des Druckstücks in der Kettenlaschenöffnung insbesondere in einer Druckstückhöhenrichtung, also in einer Richtung quer zur Längsrichtung der Laschenkette.

Um nun einer solchen unkontrollierten Bewegung des Druckstücks in der Kettenlaschenöffnung entgegen zu wirken, ist es nach der Erfindung vorgesehen, dass die Kettenlaschen eine Laschenöffnung besitzen mit die Laschenöffnung abschnittsweise bildenden Radien, die nicht konzentrisch sind mit Radien, welche die Querschnittsform der in der Laschenöffnung aufgenommen Druckstücke bilden. Damit werden die Druckstücke in der Laschenöffnung der Kettenlaschen nicht indifferent, sondern stabil aufgenommen. Die Druckstücke können also bei einer solchen beispielsweise stoßartigen Belastung nicht in Richtung nach oben oder unten auswandern, weshalb der vorstehend genannte Verschleißmechanismus unterbrochen ist.

Bei der Eingangs geschilderten Laschenkette liegt der Krümmungsmittelpunkt der der Wälzfläche der Druckstücke gegenüberliegenden Anlagefläche auf gleicher Höhe konzentrisch mit dem Krümmungsmittelpunkt der zugeordneten Rückenfläche des Druckstücks. Es wurde nun erkannt, dass eine solche konzentrische Ausbildung Verschleiß fördernd wirkt.

Im Gegensatz hierzu ist es nach der Erfindung vorgesehen, dass in einem in Längsrichtung der Laschenkette verlaufenden Querschnitt die Mitte einer Tangentialstrecke an einer der Wälzfläche der Druckstücke gegenüberliegenden Rückenfläche unterhalb der die Druckstückhöhe halbierenden Ebene liegt. Damit wird erreicht, dass die Rückenfläche des Druckstücks schräg gestellt ist relativ zur Wälzfläche des Druckstücks, deren Mittelpunkt etwa auf der Höhe der Druckstückmitte liegt, also etwa auf Höhe der die Druckstückhöhe halbierenden Ebene.

Die Erfindung wird nunmehr anhand der Zeichnung näher erläutert. Diese zeigt in:
Fig. 1 eine Ansicht von der Seite auf zwei in einer Kettenlaschenöffnung angeordnete Druckstücke einer bekannten Laschenkette;
Fig. 2 eine Ansicht ähnlich Fig. 1, bei der ein Druckstück weggelassen wurde, wobei die Figur der Erläuterung des Zusammenhangs aus an einer Anlagefläche anliegenden Kraft und des Hebelarms zum Rand der Kettenlaschenöffnung dient;
Fig.3 eine Darstellung des Spannungsverlaufs in einer Kettenlasche einer bekannten Laschenkette;
Fig. 4 eine Ansicht von der Seite auf einen Ausschnitt einer Laschenkette einer Ausführungsform nach der vorliegenden Erfindung, wobei zwei in einer Kettenlaschenöffnung angeordnete Druckstücke dargestellt sind.
Fig. 5 eine Darstellung ähnlich Fig. 4, bei der das in der Zeichnungsebene linksseitige Druckstück weggelassen worden ist, wobei die Darstellung zur Erläuterung der Beziehung aus Kraft und Hebelarm im Bereich der Anlageflächen der erfindungsgemäßen Laschenkette dient;
Fig. 6 eine Darstellung zur Erläuterung der Spannungen in der Kettenlasche einer erfindungsgemäßen Laschenkette;
Fig. 7 eine schematische Darstellung zur Erläuterung der Unterschiede zwischen einem bekannten Druckstück und einem Druckstück der Laschenkette nach der vorliegenden Erfindung zeigt; und
Fig. 8 eine Darstellung zur Erläuterung der Auswanderung des Wälzpunktes an einem Druckstückpaar einer erfindungsgemäßen Laschenkette zeigt.

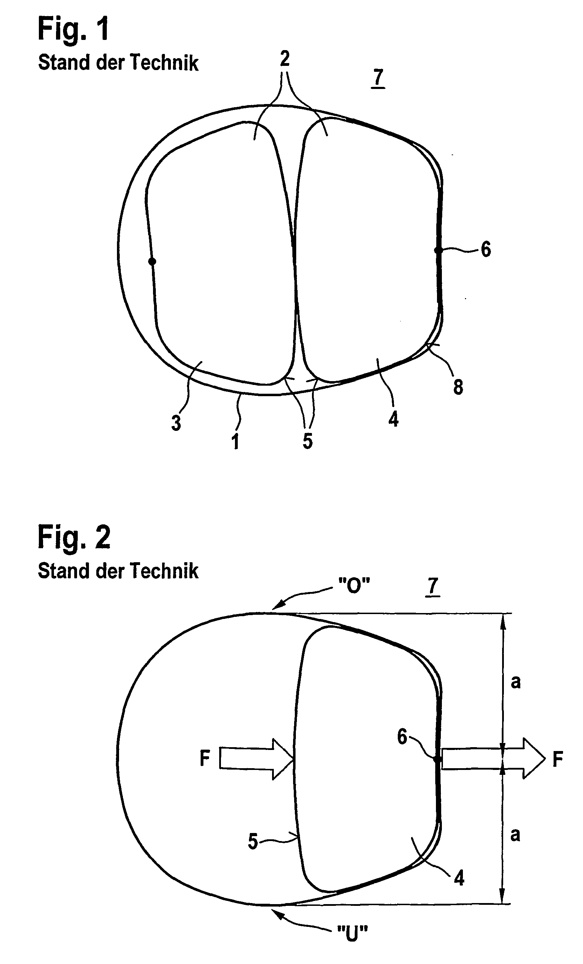

Fig. 1 zeigt in einer schematischen Darstellung einen Ausschnitt einer bekannten Laschenkette mit zwei in einer Öffnung 1 einer Kettenlasche angeordneten Druckstücken 2.

Wie es ohne weiteres ersichtlich ist, kann das in der Zeichnungsebene linksseitige Druckstück 3 in der Öffnung 1 der Kettenlasche abwälzen, während das Druckstück 4 in der Öffnung 1 anliegt.

Zwischen den beiden Druckstücken 3, 4 sind jeweilige Wälzflächen 5 angeordnet, an denen die Druckstücke aneinander abwälzen können, wenn die Laschenkette von einer gestreckten Stellung in eine gekrümmte Stellung überführt wird, was beispielsweise bei der Laufrichtungsumkehr an einem Kegelscheibenpaar der Fall ist. An den Wälzflächen 5 werden zwischen den Druckstücken 3, 4 Druckkräfte übertragen, die im dargestellten Fall vom Druckstück 4 über die Anlagefläche 6 in die Kettenlasche 7 übertragen werden. Wie es ohne weiteres ersichtlich ist, ist bei der bekannten Laschenkette den Wälzflächen 5 gegenüberliegend an der Rückenseite 8 des Druckstücks 4 nur eine Anlagefläche 6 ausgebildet.

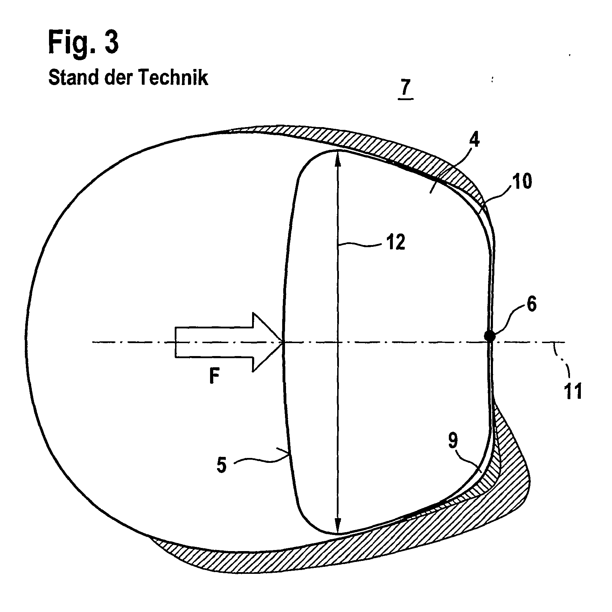

Fig. 2 zeigt nun eine Darstellung ähnlich Fig. 1, bei der das in der Zeichnungsebene linksseitige Druckstück 3 weggelassen worden ist. Die über die Wälzfläche 5 in das Druckstück 4 eingeleitete Druckkraft F wird an der Anlagefläche 6 in die Kettenlasche 7 eingeleitet und führt dort über den Hebelarm "a" zu einem Biegemoment, welches sowohl den mit "O" als auch den mit "U" bezeichneten Bereich belastet. Daraus resultierenden Biegespannungen wird aufgrund der Zugkraftbelastung der Kettenlasche 7 eine Zugspannung überlagert, sodass sich in der Kettenlasche 7 ein Spannungsverlauf ergibt, wie er in Fig. 3 der Zeichnung mit unterschiedlichen Schraffierungen dargestellt ist.

Wie es ohne weiteres ersichtlich ist, stellen sich in dem in Fig. 2 mit "O" bezeichneten Bereich Werkstoffspannungen von über 1000 N/mm² ein, während sich in dem mit "U" bezeichneten Bereich Werkstoffspannungen von über 1500N/mm² einstellen und zwar im Bereich eines unteren Freischnitts 9. Ursächlich hierfür ist, dass sich im Bereich des unteren Freischnitts 9 eine Überlagerung von Biegespannungen, Zugspannungen und Druckspannungen einstellt, da die unter Zugkraft stehende Kettenlasche 7 elastisch verformt wird und es zu einer Anlage der Kettenlasche 7 und des Druckstücks 5 auch im Bereich des unteren Freischnitts 9 sowie oberen Freischnitts 10 gelangt und im Bereich des unteren Freischnitts 9 diese Druckspannungen aufgrund der Abwinkelung der Laschenkette steigen.

Wie es anhand von Fig. 1 bis 3 der Zeichnung ersichtlich ist, ist das bekannte Druckstück 4 in Richtung der Druckstückhöhenrichtung 12 symmetrisch ausgebildet, sodass eine in der zweidimensionalen Darstellung als Gerade 11 ersichtliche Linie eine Symmetrieebene darstellt, bezüglich der das Druckstück 4 in Druckstückhöhenrichtung 12 symmetrisch ist.

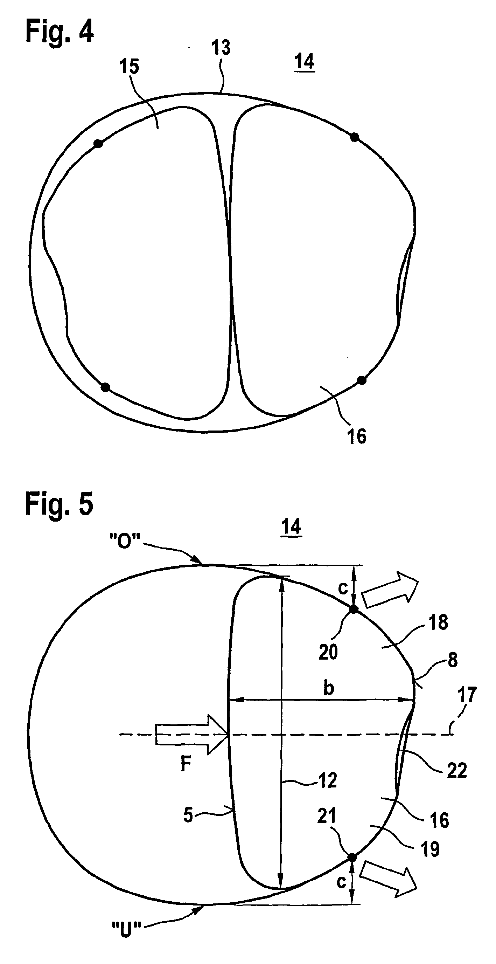

Fig. 4 der Zeichnung zeigt in einer Darstellung ähnlich Fig. 1 eine Ausschnitt aus einer erfindungsgemäßen Laschenkette mit zwei in einer Öffnung 13 einer Kettenlasche 14 angeordneten Druckstücken 15, 16.

Im Unterschied zu dem bekannten Druckstück 4 ist das Druckstück 15, 16 in Druckstückhöhenrichtung 12 (siehe Fig. 5 der Zeichnung) aber nicht symmetrisch ausgebildet, sondern asymmetrisch. In Fig. 5 ist mit dem Bezugszeichen 17 eine der Geraden 11 in Fig. 3 entsprechende Gerade eingezeichnet, die aber im Gegensatz zu der Geraden 11 nach Fig. 3 keine Symmetrieebene repräsentiert.

Das Druckstück 16 ist in Druckstückhöhenrichtung 12 asymmetrisch ausgebildet und kann nicht anhand einer Spiegelung an einer Symmetrieebene erzeugt werden. In dem Bereich 18 oberhalb der Geraden 17 weist das Druckstück 16 in Richtung der Breite "b" eine größere Breite auf als im unteren Bereich 19. Das Druckstück 16 weist verglichen mit dem Druckstück 4 - obwohl beide Druckstücke gleiche Querschnittsfläche aufweisen - eine deutlich höhere Festigkeit auf.

Eine in Richtung des Pfeils "F" in das Druckstück 16 eingeleitete Kraft stützt sich an der oberen Anlagefläche 20 an der dort gebildeten Anlagefläche der Kettenlasche 14 ab und unten an der unteren Anlagefläche 21, sodass die Kraft "F" aufgeteilt in die Anlagefläche 20, 21 eingeleitet wird. Aufgrund des im Vergleich mit dem Hebelarm "a" (Fig. 2) deutlich kleineren Hebelarms "c" (Fig. 5) erzeugen die in die Anlageflächen 20, 21 eingeleiteten Kräfte wesentlich kleinere Momente im oberen Bereich "O" bzw. im unteren Bereich "U".

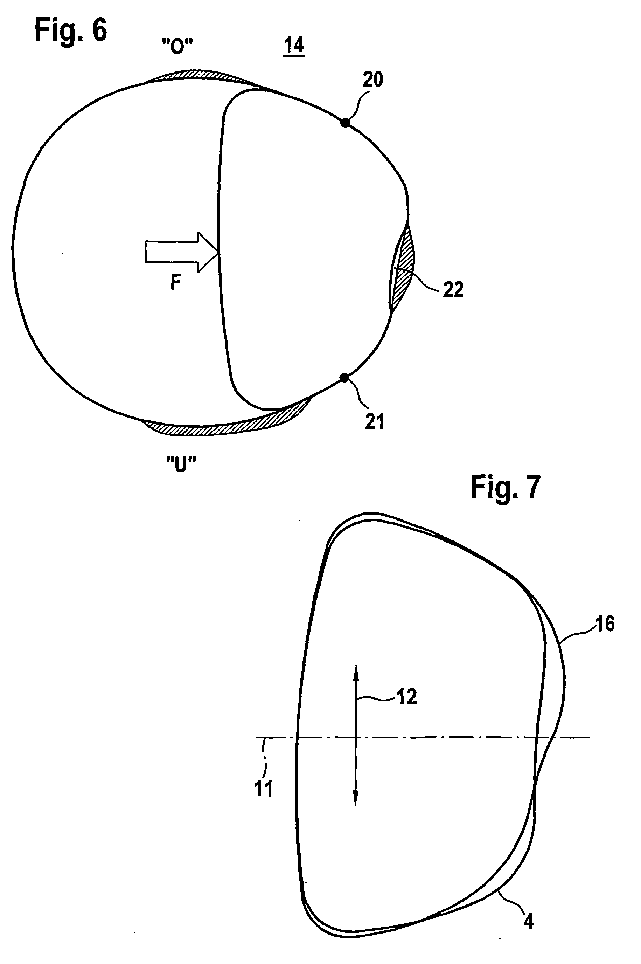

Fig. 6 der Zeichnung zeigt nun eine Darstellung der Spannungen in der Kettenlasche 14 der Laschenkette nach der vorliegenden Erfindung. Wie es ohne weiteres ersichtlich ist, sind anhand von Fig. 3 noch ersichtliche Werkstoffspannungen mit Werten von über 1500 N/mm² vollständig in Wegfall geraten.

Wie es anhand von Fig. 5 der Zeichnung ersichtlich ist, weist das Druckstück 16 im Bereich der der Wälzfläche 5 gegenüberliegenden Rückenfläche 8 einen Freischnitt 22 auf, der zwischen der oberen und der unteren Anlagefläche 20, 21 ausgebildet ist. Da dieser Freischnitt 22 aber außerhalb der Anlageflächen 20, 21 angeordnet ist, liegt er auch außerhalb des Hauptkraftflussbereiches der Kettenlasche 14 und erhöht auf diese Weise auch nicht die in der Kettenlasche 14 wirkenden Spannungen, sondern es treten auch im Bereich des Freischnitts 22 lediglich Spannungen mit Werten auf, die die Spannungswerte im oberen Bereich "O" und unteren Bereich "U" nicht überschreiten.

Fig. 7 der Zeichnung nun zeigt eine direkte Gegenüberstellung der entlang einer Längsrichtung der Laschenkette aufgenommenen Querschnittsform des bekannten Druckstücks 4 und des erfindungsgemäßen Druckstück 16. Wie es ohne weiteres ersichtlich ist, ist das bekannte Druckstück 4 in Druckstückhöhenrichtung 12 symmetrisch ausgebildet und kann anhand einer Spiegelung an der Symmetrieachse 11 erzeigt werden, während das Druckstück 16 nach der Erfindung in Druckstückhöhenrichtung 12 asymmetrisch ausgebildet ist.

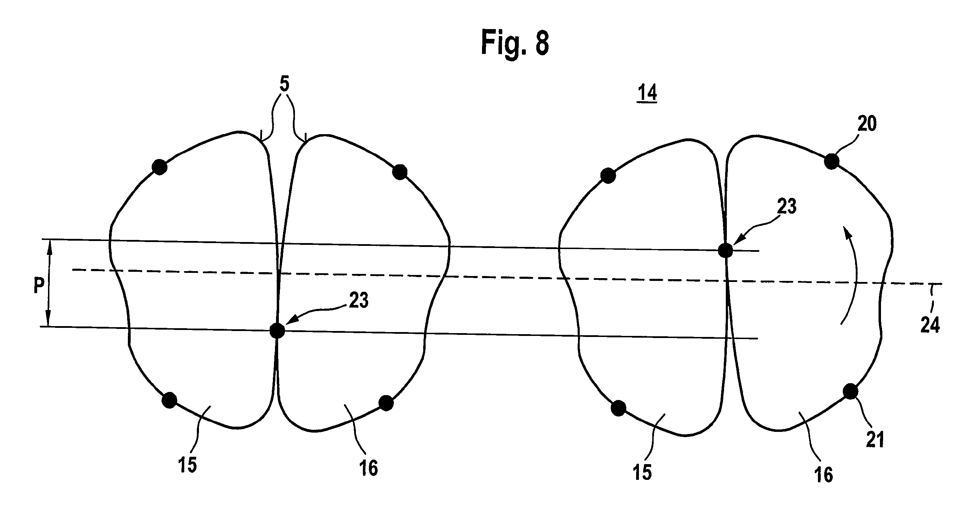

Fig. 8 der Zeichnung nun zeigt in der linksseitigen Darstellung zwei Druckstücke 15, 16 mit einem an der Wälzfläche 5 ausgebildeten Wälzpunkt 23, der sich in der gestreckten Stellung der Laschenkette (die der linksseitigen Darstellung in Fig. 8 entspricht) unterhalb einer die Druckstückhöhe halbierenden Ebene 24 befindet und bei abgewinkelter Stellung der Laschenkette - dies entspricht der in der Zeichnungsebene rechten Darstellung in Fig. 8 - in Richtung oberhalb der Ebene 24 auswandert. Diese Auswanderung des Wälzpunktes ist insbesondere eine Folge der Vergrößerung des Wälzradius der Wälzflächen 5 der Druckstücke 15, 16, sodass auch die zwischen den Druckstücken 15, 16 wirkenden Druckspannungen aufgrund dieser Flächenvergrößerung abnehmen und diese Auswanderung des Wälzpunktes 23 (Pfeil "P" in Fig. 8) nicht zu einer unzulässigen Verdrehung des Druckstückes 16 relativ zur Kettenlasche 14 führt, da die zwischen der Kettenlasche 14 und dem Druckstück 16 im Bereich der oberen Anlagefläche 20 und unteren Anlagefläche 21 wirkenden Kräfte dieser Relativdrehung des Druckstücks 16 zur Kettenlasche 14 entgegen wirken.

Die erfindungsgemäße Laschenkette zeichnet sich nun durch eine hohe Verdrehsicherheit der Druckstücke relativ zu den Kettenlaschen aus und durch eine Verringerung der Spannungsbelastung der Kettenlaschen und damit durch eine Verbesserung des Verschleißverhaltens und somit verlängerten Standzeiten.

### Bezugszeichenliste

- 1: Öffnung
- 2: Druckstücke
- 3: Druckstück
- 4: Druckstück
- 5: Wälzfläche
- 6: Anlagefläche
- 7: Kettenlasche
- 8: Rückenfläche
- 9: unterer Freischnitt
- 10: oberer Freischnitt
- 11: Symmetrieachse
- 12: Druckstückhöhenrichtung
- 13: Öffnung
- 14: Kettenlasche
- 15: Druckstück
- 16: Druckstück
- 17: Gerade
- 18: oberer Bereich
- 19: unterer Bereich
- 20: obere Anlagefläche
- 21: untere Anlagefläche
- 22: Freischnitt
- 23: Wälzpunkt
- 24: Ebene

## Patentansprüche

1. Laschenkette für insbesondere einen Fahrzeugantrieb, mit einer Vielzahl von über Druckstücke (15, 16) gelenkig miteinander verbundenen Kettenlaschen (14), wobei die Druckstücke (15, 16) quer zur Längsrichtung der Laschenkette verlaufen und an den Druckstücken (15, 16) und den Kettenlaschen (14) jeweilige gekrümmt ausgebildete Anlageflächen (20, 21) angeordnet sind, entlang derer die Druckstücke (15, 16) und Kettenlaschen (14) zur Kraftübertragung aneinander anliegen und an den Druckstücken (15, 16) gekrümmt ausgebildete Wälzflächen (5) angeordnet sind, entlang derer die Druckstücke (15, 16) zur Kraftübertragung aneinander abwälzen und wobei die Druckstücke (15, 16) in einem in Längsrichtung der Laschenkette verlaufenden Querschnitt in Druckstückhöhenrichtung (12) asymmetrisch ausgebildet sind und die Anlageflächen (20, 21) am in Druckstückhöhenrichtung (12) oberen und unteren Kontaktflächenbereich zwischen Druckstück (15, 16) und Kettenlasche (14) vorgesehen sind, **dadurch gekennzeichnet, dass** die Druckstücke (15, 16) quer zur Längsrichtung der Laschenkette in Druckstückhöhenrichtung (12) im oberen Bereich breiter ausgebildet sind als im unteren Bereich.

2. Laschenkette nach Anspruch 1, **dadurch gekennzeichnet, dass** ein Wälzradius der Wälzflächen derart gewählt ist, dass sich ein Wälzpunkt (23) zwischen Druckstücken (15, 16) aus einer bei lang gestreckter Laschenkette in Druckstückhöhenrichtung (12) unterhalb einer die Druckstückhöhe halbierenden Ebene (24) befindlichen Lage bei weitgehend abgewinkelter Laschenkette in eine Lage oberhalb der Ebene (24) bewegt.

3. Laschenkette nach einem der vorstehenden Ansprüche, **dadurch gekennzeichnet, dass** die Anlageflächen (20, 21) im jeweiligen Endbereich mit einem gekrümmt ausgebildeten Auslauf versehen sind derart, dass ein Kantentragen zwischen Druckstück (15,16) und Kettenlasche (14) weitgehend vermieden ist.

4. Laschenkette nach einem der vorstehenden Ansprüche, **dadurch gekennzeichnet, dass** zwischen den Anlageflächen (20, 21) ein Freischnitt (22) an den Druckstücken (15, 16) ausgebildet ist.

5. Laschenkette nach einem der vorstehenden Ansprüche, **dadurch gekennzeichnet, dass** die Kettenlaschen (14) derart ausgebildet sind, dass eine Laschenöffnung (13) zur Aufnahme von Druckstücken (15, 16) Bereiche mit größter Krümmung im zum Kontakt mit Druckstücken (15, 16) vorgesehenen Anlageflächenbereich besitzt.

6. Laschenkette nach einem der vorstehenden Ansprüche, **dadurch gekennzeichnet, dass** die Kettenlaschen (14) eine Laschenöffnung (13) besitzen mit die Laschenöffnung (13) abschnittsweise bildenden Radien, die nicht konzentrisch sind mit Radien, welche die Querschnittsform der in der Laschenöffnung aufgenommenen Druckstücke (15, 16) bilden.

7. Laschenkette nach einem der vorstehenden Ansprüche, **dadurch gekennzeichnet, dass** in einem in Längsrichtung der Laschenkette verlaufenden Querschnitt die Mitte einer Tangentialstrecke an einer der Wälzfläche (5) der Druckstücke (15, 16) gegenüberliegenden Rückenfläche (8) unterhalb der die Druckstückhöhe halbierenden Ebene (24) liegt.

## Claims

1. Plate link chain particularly for a vehicle drive, with a multiplicity of link plates (14) connected to one another in an articulated manner via rocker pressure pieces (15, 16), wherein the rocker pressure pieces (15, 16) run transversely with respect to the longitudinal direction of the plate link chain, and respective contact surfaces (20, 21) which are of curved designed are arranged on the rocker pressure pieces (15, 16) and the link plates (14) and along which the rocker pressure pieces (15, 16) and link plates (14) bear against one another in order to transmit force, and rolling surfaces (5) of curved design are arranged on the rocker pressure pieces (15, 16) and along which the rocker pressure pieces (15, 16) roll along one another in order to transmit force, and wherein the rocker pressure pieces (15, 16) are of asymmetrical design in a rocker-pressure-piece vertical direction (12) in a cross section running in the longitudinal direction of the plate link chain, and the contact surfaces (20, 21) are provided on the upper and lower contact surface region in the rocker-pressure-piece vertical direction (12) between the rocker pressure piece (15, 16) and link plate (14), **characterized in that** the rocker pressure pieces (15, 16) are designed transversely with respect to the longitudinal direction of the plate link chain to be wider in the upper region than in the lower region in the rocker-pressure-piece vertical direction (12).

2. Plate link chain according to Claim 1, **characterized in that** a rolling radius of the rolling surfaces is selected in such a manner that a rolling point (23) between rocker pressure pieces (15, 16) moves from a position located below a plane (24) bisecting the height of the rocker pressure pieces when the plate link chain is stretched longitudinally in the rocker-pressure-piece vertical direction (12) into a position above the plane (24) when the plate link chain is substantially bent.

3. Plate link chain according to one of the preceding claims, **characterized in that** the contact surfaces (20, 21) in the respective end region are provided with a petering-out portion of curved design in such a manner that edge wear between the rocker pressure piece (15, 16) and link plate (14) is substantially avoided.

4. Plate link chain according to one of the preceding claims, **characterized in that** a cutout (22) is formed on the rocker pressure pieces (15, 16) between the contact surfaces (20, 21).

5. Plate link chain according to one of the preceding claims, **characterized in that** the link plates (14) are designed in such a manner that a plate opening (13) for receiving rocker pressure pieces (15, 16) has regions of maximum curvature in the contact surface region provided for making contact with rocker pressure pieces (15, 16).

6. Plate link chain according to one of the preceding claims, **characterized in that** the link plates (14) have a plate opening (13) with radii which form sections of the plate opening (13) and which are not concentric with radii which form the cross-sectional shape of the rocker pressure pieces (15, 16) received in the plate opening.

7. Plate link chain according to one of the preceding claims, **characterized in that**, in a cross section running in the longitudinal direction of the plate chain, the centre of a tangential section on a back surface (8) lying opposite the rolling surface (5) of the rocker pressure pieces (15, 16) lies below the plane (24) bisecting the rocker pressure piece height.

## Revendications

1. Chaîne articulée destinée notamment à une transmission de véhicule, avec une pluralité d'éclisses de chaîne (14) reliées l'une à l'autre de manière articulée au moyen de pièces de pression (15, 16), dans laquelle les pièces de pression (15, 16) s'étendent transversalement à la direction longitudinale de la chaîne articulée et des faces d'appui respectives (20, 21) de forme courbe sont disposées sur les pièces de pression (15, 16) et sur les éclisses de chaîne (14), le long desquelles les pièces de pression (15, 16) et les éclisses de chaîne (14) s'appuient l'une sur l'autre pour la transmission des forces, et des faces de roulement (5) de forme courbe sont disposées sur les pièces de pression (15, 16), le long desquelles les pièces de pression (15, 16) roulent l'une sur l'autre pour la transmission des forces, et dans laquelle les pièces de pression (15, 16) ont une forme asymétrique, en direction verticale (12) de la pièce de pression, dans une section transversale s'étendant dans la direction longitudinale de la chaîne articulée et les faces d'appui (20, 21) sont prévues sur la zone supérieure et inférieure, dans la direction verticale (12) de la pièce de pression, de la face de contact entre la pièce de pression (15, 16) et l'éclisse de chaîne (14), **caractérisée en ce que** les pièces de pression (15, 16) sont, transversalement à la direction longitudinale de la chaîne articulée, plus larges dans la zone supérieure que dans la zone inférieure, vues dans la direction verticale (12) de la pièce de pression.

2. Chaîne articulée selon la revendication 1, **caractérisée en ce qu'**un rayon de roulement des faces de roulement est choisi de telle manière qu'un point de roulement (23) entre des pièces de pression (15, 16) se déplace d'une position se trouvant en dessous d'un plan (24) divisant en deux la hauteur verticale (12) de la pièce de pression lorsque la chaîne articulée est étendue en longueur à une position se trouvant au-dessus du plan (24) lorsque la chaîne articulée est largement incurvée.

3. Chaîne articulée selon l'une quelconque des revendications précédentes, **caractérisée en ce que** les faces d'appui (20, 21) sont pourvues d'une zone de sortie de forme courbe dans la zone terminale respective, de façon à éviter largement un appui sur des arêtes entre la pièce de pression (15, 16) et l'éclisse de chaîne (14).

4. Chaîne articulée selon l'une quelconque des revendications précédentes, **caractérisée en ce qu'**une découpe de dégagement (22) est formée sur les pièces de pression (15, 16) entre les faces d'appui (20, 21).

5. Chaîne articulée selon l'une quelconque des revendications précédentes, **caractérisée en ce que** les éclisses de chaîne (14) sont réalisées de telle manière qu'une ouverture d'éclisse (13) destinée à recevoir les pièces de pression (15, 16) comporte des zones ayant une très forte courbure dans la zone des faces d'appui prévue pour le contact avec des pièces de pression (15, 16).

6. Chaîne articulée selon l'une quelconque des revendications précédentes, **caractérisée en ce que** les éclisses de chaîne (14) comportent une ouverture d'éclisse (13) avec des rayons formant en partie l'ouverture d'éclisse (13), qui ne sont pas concentriques à des rayons qui forment la forme de la section transversale des pièces de pression (15, 16) placées dans l'ouverture d'éclisse.

7. Chaîne articulée selon l'une quelconque des revendications précédentes, **caractérisée en ce que**, dans une section transversale s'étendant dans la direction longitudinale de la chaîne articulée, le milieu d'un segment tangentiel à une face arrière (8) opposée à la face de roulement (5) des pièces de pression (15, 16) est situé en dessous du plan (24) divisant en deux la hauteur de la pièce de pression.
